# EUROPEAN PATENT SPECIFICATION

(11) **EP 2 906 874 B1**
(45) Date of publication and mention of the grant of the patent: **04.12.2019**
(21) Application number: 13788785.7
(22) Date of filing: 09.10.2013
(51) Int. Cl.: F23C 10/00, F22B 31/00, F23C 10/18

(54) **FLUIDIZED BED BOILER WITH FLUIDIZED BED HEAT EXCHANGER**
WIRBELBETTKESSEL MIT EINEM WIRBELBETTWÄRMETAUSCHER
CHAUDIÈRE À LIT FLUIDISÉ AVEC ÉCHANGEUR DE CHALEUR À LIT FLUIDISÉ

(30) Priority: 11.10.2012 FI 20126064
(43) Date of publication of application: 19.08.2015
(73) Proprietor: Sumitomo SHI FW Energia Oy, 02130 Espoo (FI)
(72) Inventor: SIPPU, Ossi, FI-78500 Varkaus (FI)
(74) Representative: Genip Oy
(86) International application number: PCT/FI2013/050975
(87) International publication number: WO 2014/057173

(56) References cited:
- GB-A- 1 588 611
- US-A- 5 533 471
- US-A- 5 601 039
- US-A1- 2004 100 902
- US-B1- 6 237 541
- US-B1- 6 631 698

## Description

### BACKGROUND OF THE INVENTION

### Field of the Invention

The present invention relates to a fluidized bed heat exchanger of a fluidized bed boiler. The invention especially relates to a fluidized bed heat exchanger comprising a front wall adjacent the fluidized bed boiler, a rear wall opposite to the front wall and two side walls, the walls being formed as water tube panels, an inlet opening arranged in a first section of an upper portion of the heat exchanger for introducing hot particles from the fluidized bed boiler to the heat exchanger, heat exchange surfaces arranged in the heat exchanger for recovering heat from the particles and an outlet opening arranged in a second section of the upper portion of the heat exchanger for returning cooled particles as an overflow from the heat exchanger back to the fluidized bed boiler, wherein the heat exchanger comprises a partition wall between the first and second sections of the upper portion of the heat exchanger

### Description of related art

Usually the front wall, rear wall and side walls enclosing the heat exchanger are mainly vertical and they have a generally known tube-fin-tube construction. The tubes of each wall are then connected to a horizontal lower header arranged below the wall so as to convey heat transfer fluid, usually water or steam, upwards to an upper header or another water tube panel. Typically the water tubes of the enclosure walls function as evaporation surfaces in a drum boiler and water preheating surfaces in a once-trough boiler.

Fluidized bed heat exchangers are commonly used in fluidized bed boilers to recover heat from hot solid particles conveyed from the furnace of the boiler to the heat exchanger. After cooling in the heat exchanger, the cooled particles are returned back to the furnace. The fluidized bed heat exchanger may be connected to the hot loop of a circulating fluidized bed boiler or it may receive hot solid particles directly from the furnace. It is also common that hot solid particles are received to the heat exchanger both from the hot loop, i.e. from a particle separator of the fluidized bed boiler, and directly from the furnace.

Basic requirements or desired properties of a heat exchanger include that a sufficient amount of heat can be recovered in the heat exchanger, that the amount of recovered heat can be controlled as desired, that the heat exchanger can be used continuously without problems and that the operation of the heat exchanger does not harm the processes in the boiler, for example, by increasing the emissions to the environment.

US Patent No. 7,240,639 discloses a circulating fluidized bed boiler with a fluidized bed heat exchanger which is especially advantageous for efficient control of the recovered heat. It comprises an inlet opening for introducing hot solid particles directly from the furnace and from the particle separator of the boiler to the top of the heat exchanger. A portion of the particles is cooled in heat exchange surfaces and discharged through a lift channel from the bottom of the heat exchanger back to the furnace. Another portion of the particles can, especially at high loads, be discharged without cooling to the furnace as an overflow through another opening and a discharge channel. A disadvantage of this construction is that the existence of a lift channel adjacent the furnace tends to move the center of gravity of the heat exchanger further away from the furnace, which makes the supporting of the heat exchanger more difficult.

US Patent No. 6,336,500 shows in Fig. 3 a circulating fluidized bed boiler with a fluidized bed heat exchanger having an inlet opening for introducing hot particles from the particle separator of the boiler through an inlet channel adjacent a slanted top wall and a vertical rear wall of the heat exchanger to the bottom portion of the heat exchanger. The particles are cooled on heat exchange surfaces of the heat exchanger and discharged as an overflow back to the furnace. A disadvantage of this construction is that the existence of an inlet channel adjacent the rear wall tends to move the center of gravity of the heat exchanger further away from the furnace.

US Patent No. 5,533,471 shows in Fig. 3 a fluidized bed boiler with a fluidized bed heat exchanger having an inlet opening for introducing hot particles directly from the furnace of the boiler to the top of the heat exchanger. The particles are conveyed along a slanted inlet channel formed by a slanted partition wall arranged adjacent a slanted top wall of the heat exchanger. Particles are cooled on heat exchange surfaces of the heat exchanger before being discharged as an overflow from the top of the heat exchanger back to the furnace. A disadvantage of this construction is that the inlet channel causes friction to the incoming particle flow and may limit the highest amount of particles which can be introduced into the heat exchanger. Also, in some conditions an inlet channel, as well as an outlet channel, may become at least partially blocked due to coarse particles or agglomerates collecting or forming in the heat exchanger.

US Patent No. 6.631.698 describes a fluidized bed boiler with a fluidized bed heat exchanger according to the preamble of claim 1.

In the above mentioned prior art documents, solid particles are conveyed to or from a heat exchanger along a channel which is formed adjacent a front wall, top wall or rear wall of the heat exchanger. The construction of the partition wall forming the channel is not disclosed, but according to a common art the partition wall can be made as uncooled refractory construction or refractory covered metal plate construction. A cooled partition wall, however, is generally a better solution in terms of endurance or heat balance of the construction. A cooled partition wall close to an adjacent wall can advantageously be constructed by bending a portion of water tubes out from the adjacent wall to run along the partition wall, parallel to the water tubes of the adjacent wall, to be finally bent back to the adjacent wall. An example of forming a discharge channel by bending water tubes of a furnace wall is shown in US Patent No. 5,526,775. Such a construction may, however, be quite complicated and may have a disadvantage that as a result of bending water tubes from the adjacent wall to run along a partition wall, the number of water tubes in the adjacent wall decreases, which may cause harmful thermal stresses to the wall.

A construction in which solid particles are conveyed to or from a heat exchanger along a channel may, especially at high loads, create a situation in which a portion of hot solid particles entering towards the heat exchanger cannot flow through the heat exchanger, but they are let to bypass the heat exchanger and return to the furnace uncooled. Therefore, in order to recover enough energy, the heat exchanger and the heat transfer surfaces have to be made relatively large to increase the residence time of the particles in the heat exchanger so as to cool the particles to a relatively low temperature. A large heat exchanger requires a large space and makes the supporting more difficult. A relatively low temperature in the heat exchanger may in some cases lead to unwanted chemical reactions. Especially in oxyfuel combustion, in which the partial pressure of CO₂ is high, a temperature that is too low may lead to recarbonation of CaO in the heat exchanger.

An object of the present invention is to provide a fluidized bed heat exchanger of a fluidized bed boiler in which at least some of the above mentioned problems are minimized.

### SUMMARY OF THE INVENTION

The present invention provides a fluidized bed boiler with a fluidized bed heat exchanger according to claim 1.

By the expression of returning cooled particles from the heat exchanger as an overflow back to the boiler is herein denoted that the particles are discharged from the heat exchanger directly from the top of the main fluidized bed, i.e., of the fluidized bed in which the heat exchange surfaces are arranged. Thus, the outlet of the heat exchanger does not comprise a lifting channel in which particles are discharged upwards from the bottom of the heat exchanger. Advantageously, the fluidized bed of the heat exchanger is undivided. Thus, there is no partition wall, for example, a vertical partition wall, dividing an essential portion of the portion of the fluidized bed in which the heat exchange surfaces are arranged into two sections.

The expression of the partition wall being formed by bending water tubes from at least one side wall of the heat exchanger herein refers to the partition wall comprising water tubes which are a continuation of corresponding water tubes of at least one side wall of the heat exchanger.

Because the particle flow through the heat exchanger can be, by utilizing the above described features of the present construction, easily designed such as to render possible a relatively high particle flow, in practice any desired heat recovery rate can be obtained without cooling the particles to a very low temperature in the heat exchanger. Therefore, the heat exchanger can be relatively small. Moreover, due to the low level of cooling, the risk of unwanted chemical reactions, especially in oxyfuel combustion, is minimized.

By making the partition wall to extend to a center section of the heat exchanger, it becomes more difficult to arrange cooling for the partition wall than for a partition wall adjacent the rear wall or front wall of the heat exchanger. One possibility would be to arrange a transverse header at the lower end of the partition wall to provide water to water tubes flowing along the partition wall to the front wall. In such a construction, however, it is relatively difficult to continue the water tubes further from the front wall. Therefore, the present invention provides a solution, in which the partition wall is formed by bending water tubes from at least one side wall of the heat exchanger.

According to the present invention, the partition wall is formed by bending tubes from at least one side wall as a first horizontal section extending towards a center section of the partition wall and as a second horizontal section from the center section of the partition wall back to said side wall. Preferably, the partition wall is formed by bending tubes from each of the two side walls as a first horizontal section extending towards a center section of the partition wall and from the center section as a second horizontal section back to the side wall. Advantageously, the first horizontal section is arranged below the second horizontal section.

The partition wall is, as seen from the front wall, downwards slanted so as to guide particles introduced into the heat exchanger closer to the rear wall, further away from the furnace. Thereby particles introduced towards the heat exchanger at any location at the top surface of the heat exchanger are guided to the rear portion of the heat exchanger. The particles are discharged from the heat exchanger through an outlet opening in the front wall, and therefore they proceed in the fluidized bed of the heat exchanger horizontally towards the front wall. By changing the fluidizing velocity of the fluidized bed it is possible to efficiently control movement of particles around the heat exchange surfaces, and the rate of heat recovery in the heat exchanger. Thus, the present construction provides efficient means for controlling, for example, the temperature of superheated or reheated steam.

According to a preferred embodiment of the present invention, the heat exchange surfaces are arranged below the vertical level of the lower edge of the outlet opening. Because the lower edge of the outlet opening defines the vertical level of the top surface of the fluidized bed forming in the heat exchanger, the construction provides the advantage that the heat exchange surfaces are always in use embedded in the fluidized bed. Preferably, the lower end of the partition wall is approximately at the same vertical level as, even more preferably at a slightly lower vertical level than, the lower edge of the outlet opening. This is advantageous, because if the lower end of the partition wall would be at a higher level than the lower edge of the outlet opening, there would be a possibility that particles could float on the surface of the fluidized bed directly from the inlet to the outlet without cooling in the heat exchange surfaces. Preferably, the lower end of the partition wall is at most 0.2 m, even more preferably at most 0.1 m, below the vertical level of the lower edge of the outlet opening.

According to a preferred embodiment of the present invention, a windbox is arranged below the heat exchanger, which windbox is divided into a first section, which is mainly below the partition wall, and a second section, which is mainly not below the partition wall. The portions of the fluidized bed above the first section and the second section of the windbox can thus be called as outlet side and inlet side of the fluidized bed, respectively. A divided windbox renders it possible to have a different fluidizing velocity on the inlet side and outlet side of the fluidized bed. Preferably, a slightly higher fluidizing velocity is used on the outlet side of the fluidizing bed than on the inlet side of the fluidized bed in order to enhance the circulation of particles in the fluidized bed. In oxyfuel combustion it is possible to have different oxygen contents of the fluidizing gases introduced through the first and second windbox sections. It is also possible that, especially in a large fluidized bed heat exchanger, at least one of the first and second wind box sections is further divided into two, or even more than two, sections.

The above brief description, as well as further objects, features, and advantages of the present invention will be more fully appreciated by reference to the following detailed description of the presently preferred, but nonetheless illustrative, embodiments in accordance with the present invention, when taken in conjunction with the accompanying drawings, wherein:

### BRIEF DESCRIPTION OF THE DRAWINGS

Fig. 1 is a schematic vertical cross section of a heat exchanger according to an embodiment of the present invention.
Fig. 2 is a schematic vertical cross section of side wall tubes forming a partition wall in a heat exchanger according to the present invention.

### DETAILED DESCRIPTION OF THE INVENTION

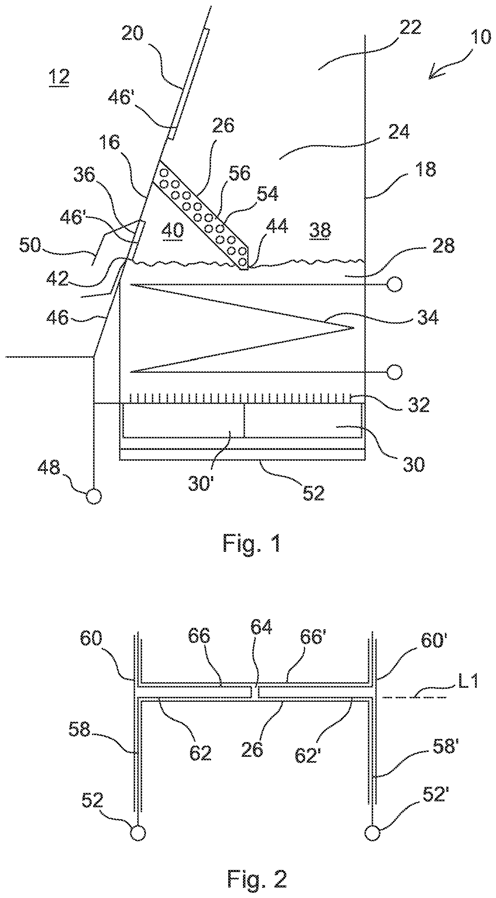

Fig. 1 schematically shows a heat exchanger 10 connected to a furnace 12 of a fluidized bed boiler. The heat exchanger is enclosed by a front wall 16, a rear wall 18 and two side walls. Particles are introduced into the heat exchanger through an opening 20 in the front wall and through the lower end of a channel 22 returning particles from a particle separator (not shown). Thus, the opening 20 in the front wall 16 and the lower end of the channel 22 can be said to commonly form the inlet opening 24 of the heat exchanger. Alternatively, in other embodiments of the present invention, the inlet opening of the heat exchanger can be formed, for example, solely of one or more openings in the front wall, or solely of the lower end of one or more channels returning particles from a particle separator. According to the present invention, at least a portion of the particles introduced to the heat exchanger via the inlet opening 24 is guided by a slanted partition wall 26 from the front wall side of the heat exchanger 10 towards a rear wall side of the heat exchanger.

A bed of particles 28 fluidized by fluidizing gas introduced to the heat exchanger through a windbox 30 and nozzles 32 forms in the lower portion of the heat exchanger 10. Heat exchange surfaces 34 are arranged in the lower portion of the heat exchanger for recovering heat from the particles. After cooling on the heat exchange surfaces, the particles are discharged from the heat exchanger 10 back to the furnace 12 as an overflow through an outlet opening 36 in the front wall 16.

Because the height of the fluidized bed 28 is determined by the vertical level of the lower edge of the outlet opening 36, the outlet opening is located in the upper portion of the heat exchanger 10. Thus, the partition wall 26 divides the upper portion of the heat exchanger 10 into a first section 38 comprising the inlet opening 24, and a second section 40 comprising the outlet opening 36.

In order to prevent attrition of the heat exchange surfaces 34 by particles falling on top of the fluidized bed 28, the heat exchange surfaces 34 are advantageously arranged below the vertical level of the lower edge 42 of the outlet opening 36. According to a preferred embodiment of the present invention, the partition wall 26 has a lower end 44 approximately at the same vertical level as the lower edge 42 of the outlet opening 36. Preferably, the lower end 44 of the partition wall 26 is at a vertical level within 0.2 m, even more preferably within 0.1 m, from that of the lower edge 42 of the outlet opening 36. In order to prevent direct floating of particles on the surface of the particle bed 28 from the rear side of the particle bed to the outlet opening 36, the lower end 44 of the partition wall 26 is advantageously at a vertical level slightly below the vertical level of the lower edge 42 of the outlet opening 36.

The partition wall 26 extends advantageously from the front wall 16 downwards in an angle of about 45 degrees, preferably between 30 and 60 degrees, even more preferably between 40 and 50 degrees, from horizontal, to a center section of the heat exchanger. The lower end 44 of the partition wall 26 is approximately as far from the front wall 16 and the rear wall 18. The lower end 44 of the partition wall is in a horizontal cross section spaced apart from the front wall 16 by 40-60 %, of the distance between the rear wall 18 and the front wall 16.

The front wall 16 of the heat exchanger 10 is preferably a common wall with the furnace 12. The front wall 16 is in Fig. 1 slanted due to the shape of the lower section of the furnace 12. The front wall 16 is thus formed as a water tube panel, i.e. as a tube-fin-tube construction, of mainly vertical water tubes 46 leading water from a lower header 48 to an upper header (not shown in Fig. 1). Inlet opening 24 and outlet opening 36 of the heat exchanger 10 are preferably formed in the front wall 16 by bending some water tubes 46' out from the water tube panel. The outlet opening 36 may be equipped by a chute-like construction 50, to guide particles from the heat exchanger 10 and to prevent particles from entering from the furnace 12 through the outlet opening 36 to the heat exchanger.

The side walls of the heat exchanger 10 are preferably formed as a water tube panel, i.e. as a tube-fin-tube construction, of mainly vertical water tubes leading water from a lower header 52 to an upper header (not shown in the Figures). The partition wall 26 is formed of water tubes 54 covered by a layer of refractory 56. According to the present invention, the partition wall 26 is formed by bending water tubes from at least one side wall, preferably from two side walls, of the heat exchanger. Thereby, the forming of the partition wall does not weaken or complicate the arrangement of water tubes in the front wall 16.

According to a preferred embodiment of the present invention, the windbox 30 below the heat exchanger 10 is divided into a first section 30 which is mainly not below the partition wall 26 and a second section 30' which is mainly below the partition wall 26.

An exemplary way of forming of the partition wall 26 by bending water tubes from the sidewalls of the heat exchanger is schematically shown in Fig. 2. Thus, Fig. 2 shows in a vertical cross section lower headers 52, 52' and vertical water tubes 58, 58' of the side walls 60, 60'. At the vertical level L1, the water tubes 58, 58' are bent to form a first horizontal section 62, 62' towards the center section 64 of the partition wall 26. At the center section 64, the water tubes are bent back to form a second horizontal section 66, 66' from the center section 64 back to the side walls 60, 60'. First and second horizontal sections 62, 62', 66, 66', shown in Fig. 1 as water tubes 54, are covered by a refractory layer 56 in the partition wall 26. Advantageously, the first horizontal section 62, 62' of each water tube is directly below the second horizontal section 66, 66' of the same tube. At the sidewalls 60, 60', the water tubes are again bent up to continue as vertical water tubes.

While the invention has been described herein by way of examples in connection with what are at present considered to be the most preferred embodiments, it is to be understood that the invention is not limited to the disclosed embodiments, but is intended to cover various combinations or modifications of its features and several other applications included within the scope of the invention as defined in the appended claims.

## Claims

1. A fluidized bed boiler (12) with a fluidized bed heat exchanger (10), the heat exchanger comprising a front wall (16) adjacent the fluidized bed boiler, a rear wall (18) opposite to the front wall and two side walls (60, 60'), the walls being formed as water tube panels, an inlet opening (24) arranged in a first section of an upper portion of the heat exchanger for introducing hot particles from the fluidized bed boiler to the heat exchanger, heat exchange surfaces (34) for recovering heat from the particles and an outlet opening (36) arranged in a second section of the upper portion of the heat exchanger for returning cooled particles as an overflow from the heat exchanger back to the fluidized bed boiler, wherein the heat exchanger comprises a partition wall (26) between the first (38) and second (40) sections of the upper portion of the heat exchanger, wherein the partition wall (26) is downwards slanted so as to guide particles into the heat exchanger further away from the furnace, and
**characterized in that** the partition wall (26) extends from the front wall (16) to a portion of the heat exchanger which is spaced apart from the front wall (16) and the rear wall (18) by 40-60 % of the distance between the front wall and the rear wall, the partition wall (26) is formed by bending water tubes from at least one side wall (60, 60') of the heat exchanger as a first horizontal section (62, 62') extending towards a center section (64) of the partition wall and as a second horizontal section (66, 66') from the center section of the partition wall back to the side wall.

2. The fluidized bed boiler according to claim 1, **characterized in that** the partition wall (26) extends to a portion of the heat exchanger which is approximately at an equal distance from the front wall (16) and from the rear wall (18).

3. The fluidized bed boiler according to claim 1, **characterized in that** the partition wall (26) is formed by bending water tubes from each of the two side walls (60, 60') of the heat exchanger as a first horizontal section (62, 62') extending towards a center section (64) of the partition wall and as a second horizontal section (66, 66') from the center section of the partition wall back to the side wall.

4. The fluidized bed boiler according to any of claims 1 and 3, **characterized in that** the first horizontal section (62, 62') is directly below the second horizontal section (66, 66').

5. The fluidized bed boiler according to claim 1, **characterized in that** the partition wall has a lower end (44) approximately at the same vertical level as the lower edge (42) of the outlet opening (36).

6. The fluidized bed boiler according to claim 5, **characterized in that** the partition wall (26) has a lower end (44) at a vertical level which is within 0.2 m, preferably within 0.1 m, from that of the lower edge (42) of the outlet opening (36).

7. The fluidized bed boiler according to claim 1, **characterized in that** the partition wall (26) has a lower end (44) below the vertical level of the lower edge (42) of the outlet opening (36).

8. The fluidized bed boiler according to claim 1, **characterized in that** the heat exchange surfaces (34) are arranged below the vertical level of the lower edge (42) of the outlet opening (36).

9. The fluidized bed boiler according to claim 1, **characterized in that** a windbox is arranged below the heat exchanger (10), which windbox is divided into a first section (30) which is mainly not below the partition wall (26) and a second section (30') which is mainly below the partition wall (26).

## Patentansprüche

1. Wirbelbettkessel (12) mit einem Wirbelbettwärmetauscher (10), wobei der Wärmetauscher eine Vorderwand (16) angrenzend an den Wirbelbettkessel, eine Rückwand (18) gegenüber der Vorderwand und zwei Seitenwände (60, 60'), wobei die Wände als Wasserrohrplatten ausgebildet sind, eine Einlassöffnung (24), die in einem ersten Abschnitt eines oberen Teils des Wärmetauschers zum Einleiten von heißen Teilchen von dem Wirbelbettkessel zu dem Wärmetauscher angeordnet ist, Wärmetauscheroberflächen (34) zum Wiedergewinnen von Wärme von den Teilchen und eine Auslassöffnung (36), die in einem zweiten Abschnitt des oberen Teils des Wärmetauschers zum Zurückführen von gekühlten Teilchen als Überlauf von dem Wärmetauscher zurück zu dem Wirbelbettkessel angeordnet ist, umfasst, wobei der Wärmetauscher eine Trennwand (26) zwischen dem ersten (38) und zweiten (40) Abschnitt des oberen Teils des Wärmetauschers umfasst, wobei die Trennwand (26) nach unten schräg verläuft, um Teilchen in den Wärmetauscher weiter weg vom Ofen zu leiten, und
**dadurch gekennzeichnet, dass** die Trennwand (26) sich von der Vorderwand (16) zu einem Teil des Wärmetauschers erstreckt, der von der Vorderwand (16) und der Rückwand (18) um 40-60% des Abstands zwischen der Vorderwand und der Rückwand beabstandet ist, dass die Trennwand (26) durch Biegen von Wasserrohren von mindestens einer Seite der Wand (60, 60') des Wärmetauschers als ein erster horizontaler Abschnitt (62, 62'), der sich in Richtung eines mittleren Abschnitts (64) der Trennwand erstreckt, und als ein zweiter horizontaler Abschnitt (66, 66') von dem mittleren Abschnitt der Trennwand zurück zur Seitenwand gebildet wird.

2. Wirbelbettkessel nach Anspruch 1, **dadurch gekennzeichnet, dass** die Trennwand (26) sich zu einem Teil des Wärmetauschers erstreckt, der ungefähr gleich weit von der Vorderwand (16) und von der Rückwand (18) beabstandet ist.

3. Wirbelbettkessel nach Anspruch 1, **dadurch gekennzeichnet, dass** die Trennwand (26) durch Biegen von Wasserrohren von jeder der zwei Seitenwände (60, 60') des Wärmetauschers als ein erster horizontaler Abschnitt (62, 62'), der sich in Richtung eines mittleren Abschnitts (64) der Trennwand erstreckt, und als ein zweiter horizontaler Abschnitt (66, 66') von dem mittleren Abschnitt der Trennwand zurück zu der Seitenwand gebildet wird.

4. Wirbelbettkessel nach einem der Ansprüche 1 und 3, **dadurch gekennzeichnet, dass** der erste horizontale Abschnitt (62, 62') sich direkt unterhalb des zweiten horizontalen Abschnitts (66, 66') befindet.

5. Wirbelbettkessel nach Anspruch 1, **dadurch gekennzeichnet, dass** die Trennwand ein niedrigeres Ende (44) auf ungefähr auf derselben vertikalen Höhe wie der untere Rand (42) der Auslassöffnung (36) aufweist.

6. Wirbelbettkessel nach Anspruch 5, **dadurch gekennzeichnet, dass** die Trennwand (26) ein unteres Ende (44) auf einer vertikalen Höhe aufweist, das sich innerhalb von 0,2 m, vorzugsweise innerhalb von 0,1 m, Abstand zu der des unteren Rands (42) der Auslassöffnung (36) befindet.

7. Wirbelbettkessel nach Anspruch 1, **dadurch gekennzeichnet, dass** die Trennwand (26) ein unteres Ende (44) unterhalb der vertikalen Höhe des unteren Rands (42) der Auslassöffnung (36) aufweist.

8. Wirbelbettkessel nach Anspruch 1, **dadurch gekennzeichnet, dass** die Wärmetauscheroberflächen (34) unterhalb der vertikalen Höhe des unteren Rands (42) der Auslassöffnung (36) angeordnet sind.

9. Wirbelbettkessel nach Anspruch 1, **dadurch gekennzeichnet, dass** ein Windkasten unterhalb des Wärmetauschers (10) angeordnet ist, wobei der Windkasten in einen ersten Abschnitt (30), der im Wesentlichen nicht unterhalb der Trennwand (26) ist, und einen zweiten Abschnitt (30'), der im Wesentlichen unterhalb der Trennwand (26) ist, unterteilt ist.

## Revendications

1. Chaudière à lit fluidisé (12) munie d'un échangeur de chaleur à lit fluidisé (10), l'échangeur de chaleur comprenant une paroi avant (16) adjacente à la chaudière à lit fluidisé, une paroi arrière (18) située à l'opposé de la paroi avant et deux parois latérales (60, 60'), les parois étant formées comme des panneaux à tubes d'eau, une ouverture d'entrée (24) agencée dans une première section d'une partie supérieure de l'échangeur de chaleur permettant d'introduire des particules chaudes provenant de la chaudière à lit fluidisé vers l'échangeur de chaleur, des surfaces d'échange de chaleur (34) permettant de récupérer de la chaleur provenant des particules et une ouverture de sortie (36) agencée dans une seconde section de la partie supérieure de l'échangeur de chaleur permettant de renvoyer des particules refroidies en tant que trop-plein provenant de l'échangeur de chaleur vers la chaudière à lit fluidisé, dans laquelle l'échangeur de chaleur comprend une paroi de partition (26) située entre les première (38) et seconde (40) sections de la partie supérieure de l'échangeur de chaleur, dans laquelle la paroi de partition (26) est incliné vers le bas de manière à éloigner encore plus du four les particules situées dans l'échangeur de chaleur, et
**caractérisée en ce que** la paroi de partition (26) s'étend de la paroi avant (16) à une partie de l'échangeur de chaleur qui est espacée de la paroi avant (16) et de la paroi arrière (18) par 40 à 60 % de la distance entre la paroi avant et la paroi arrière, la paroi de partition (26) est formée par la flexion des tubes d'eau à partir d'au moins une paroi latérale (60, 60') de l'échangeur de chaleur en tant que première section horizontale (62, 62') s'étendant direction une section centrale (64) de la paroi de partition et en tant que seconde section horizontale (66, 66') de la section centrale de la paroi de partition vers l'arrière en direction de la paroi latérale.

2. Chaudière à lit fluidisé selon la revendication 1, **caractérisée en ce que** la paroi de partition (26) s'étend vers une partie de l'échangeur de chaleur qui est situé à une distance égale de la paroi avant (16) et de la paroi arrière (18).

3. Chaudière à lit fluidisé selon la revendication 1, **caractérisée en ce que** la paroi de partition (26) est formée par flexion des tubes d'eau en provenance de chacune des deux parois latérales (60, 60') de l'échangeur de chaleur en tant que première section horizontale (62, 62') s'étendant en direction d'une section centrale (64) de la paroi de partition et en tant que seconde section horizontale (66, 66') depuis la section centrale de la paroi de partition vers l'arrière en direction de la paroi latérale

4. Chaudière à lit fluidisé selon l'une quelconque des revendications 1 à 3, **caractérisée en ce que** la première section horizontale (62, 62') se trouve directement en dessous de la seconde action horizontale (66, 66').

5. Chaudière à lit fluidisé selon la revendication 1, **caractérisée en ce que** la paroi de partition comporte une extrémité inférieure (44) approximativement au même niveau vertical que le bord inférieur (42) de l'ouverture de sortie (36).

6. Chaudière à lit fluidisé selon la revendication 5, **caractérisée en ce que** la paroi de partition (26) comporte une extrémité inférieure (44) à un niveau vertical qui se situe à moins de 0,2 m, de préférence à moins de 0,1 m, du niveau du bord inférieur (42) de l'ouverture de sortie (36).

7. Chaudière à lit fluidisé selon la revendication 1, **caractérisée en ce que** la paroi de partition (26) comporte une extrémité inférieure (44) située en dessous du niveau vertical du bord inférieur (42) de l'ouverture de sortie (36).

8. Chaudière à lit fluidisé selon la revendication 1, **caractérisée en ce que** les surfaces d'échange de chaleur (34) sont agencées en dessous du niveau vertical du bord inférieur (42) de l'ouverture de sortie (36).

9. Chaudière à lit fluidisé selon l'une quelconque des revendications 1, **caractérisée en ce qu'**une caisse d'admission d'air est agencée en dessous de l'échangeur de chaleur (10), ladite caisse d'admission d'air est divisée en une première section (30) qui ne se situe principalement pas sous la paroi de partition (26) et en une seconde section (30') qui se situe principalement sous la paroi de partition (26).
